# EUROPÄISCHE PATENTSCHRIFT

(11) **EP 4 018 464 B1**
(45) Veröffentlichungstag und Bekanntmachung des Hinweises auf die Patenterteilung: **29.05.2024**
(21) Anmeldenummer: 20746562.6
(22) Anmeldetag: 21.07.2020
(51) Int. Cl.: H01F 27/28, B60L 5/00, H01F 38/14, H04B 5/00

(54) **SYSTEM ZUR BERÜHRUNGSLOSEN ÜBERTRAGUNG ELEKTRISCHER LEISTUNG VON EINEM PRIMÄRLEITER AN EINE WICKLUNG**
SYSTEM FOR CONTACTLESS POWER TRANSFER FROM A PRIMARY LINE TO A WINDING
SYSTÈME DE TRANSFERT DE PUISSANCE SANS CONTACT D'UNE LIGNE PRIMAIRE À UN ENROULEMENT

(30) Priorität: 19.08.2019 DE 102019005762
(43) Veröffentlichungstag der Anmeldung: 29.06.2022
(73) Patentinhaber: SEW-EURODRIVE GmbH & Co. KG, 76646 Bruchsal (DE)
(72) Erfinder: WOLF, Harald, 76698 Ubstadt-Weiher (DE)
(86) Internationale Anmeldenummer: PCT/EP2020/025340
(87) Internationale Veröffentlichungsnummer: WO 2021/032313

(56) Entgegenhaltungen:
- WO-A1-2007/048268
- WO-A2-2011/149263
- WO-A2-2011/152677
- DE-A1- 1 455 372
- DE-A1- 2 228 540
- KR-B1- 101 230 608
- US-A- 5 804 892
- US-A- 6 089 512

## Beschreibung

Die Erfindung betrifft ein System zur berührungslosen Übertragung elektrischer Leistung von einem Primärleiter an eine Wicklung.

Es ist allgemein bekannt, dass bei einem Transformator elektrische Leitung induktiv übertragbar ist.

Aus der Figur 6A und den Figuren 11A bis 12 der WO 2007/048 268 A1 ist **ein gleichmäßiges Durchtauschen, also Permutieren, von Leitungen bekannt.**

**Aus der** US 2015 / 0 246 614 A1 **ist eine induktive Versorgung von Fahrzeugen aus der Landstraße heraus bekannt.**

**Aus der** US 2009 / 0 116 618 A1 **ist ein Röntgen-Computer-Tomographie-Gerät bekannt.**

**Aus der** DE 14 55 372 A1 ist **eine Informationsübertragung an einen Zug an bestimmten Streckenorten bekannt.**

**Aus der** KR 101 230 608 B1 **ist eine Leitungsanordnung** mit parallelen Leiterabschnitten aufweisend mehrerer Leiter bekannt, bei der die Position der inneren Leiter zwischen den Leiterabschnitten durchgetauscht wird.

**Aus der** DE 22 28 540 A1 **ist eine induktive Funkünbertragungsleitung bekannt.**

**Aus der** WO 2011 7149263 A2 **ist eine elektromagnetische Abschirmung bekannt.**

**Aus der** WO 2011/152677 A2 **ist ein Versorgungsmodul für Kreuzsegmente bekannt.**

**Aus der** US 5 804 892 A **ist eine Übertragungsanordnung bekannt.**

**Aus der** US 6 089 512 A **ist ein spurgeführtes Transportsystem bekannt.**

Der Erfindung liegt daher die Aufgabe zugrunde, eine möglichst effiziente Übertragung zu erreichen.

Erfindungsgemäß wird die Aufgabe bei dem System nach den in Anspruch 1 angegebenen Merkmalen gelöst.

**Merkmale bei einem nicht erfindungsgemäßen** System zur berührungslosen Übertragung elektrischer Leistung von einem Primärleiter an eine Wicklung, die an einem entlang einer Verfahrfläche bewegbaren Mobilteil angeordnet ist, insbesondere an der dem Primärleiter zugewandten Seite, insbesondere Unterseite, des Mobilteils, sind, dass
der Primärleiter Primärleiterabschnitte aufweist, die miteinander oder über jeweils eine Vertauschungsstelle elektrisch verbunden sind,
wobei der Primärleiter Leitungen, insbesondere drei, insbesondere zueinander und zur Verfahrfläche parallel verlegte Leitungen, aufweist,
wobei jede der Leitungen einen jeweiligen Abstand zur Verfahrfläche aufweist,
wobei im jeweiligen Primärleiterabschnitt die, insbesondere alle, Abstände der Leitungen sich voneinander unterscheiden,
insbesondere wobei eine erste der Leitungen den kleinsten der Abstände aufweist,
wobei ein erster Primärleiterabschnitt über eine Vertauschungsstelle mit einem zweiten Primärleiterabschnitt elektrisch verbunden ist, so dass eine zweite Leitung im ersten Primärleiterabschnitt einen kleineren Abstand als eine dritte Leitung aufweist und im zweiten Primärleiterabschnitt die zweite Leitung einen größeren Abstand aufweist als die dritte Leitung,
**wobei die erste der Leitungen im ersten Primärleiterabschnitt den gleichen, auf die Verfahrfläche bezogenen Abstand aufweist wie im zweiten Primärleiterabschnitt.**

Von Vorteil ist dabei, dass der in der zweiten und dritten Leitung fließende Strombetrag angeglichen wird mittels der Vertauschung. In der ersten Leitung, also in der dem Ferritkern mit Wicklung am nächsten gelegenen Leitung, fließt infolge der magnetischen Kopplungen der Leitungen ein etwas größerer Strombetrag, obwohl alle Leitungen an den Verbindungsstellen miteinander verbunden sind. Dadurch, dass nur die Vertauschung der zweiten und dritten Leitung ausgeführt wird, ist die Vertauschungsstelle, also der in Richtung der Verlegung des Primärleiters benötigte Bereich möglichst klein.

Somit ist der Primärleiter also aus Leitungen ausgeführt, die elektrisch parallelgeschaltet sind und als Stromschleife, insbesondere also langgestreckte Stromschleife, insbesondere Abzweigungen aufweisend, verlegt sind. Die Leitungen sind an einer ersten Verbindungsstelle und an einer davon beabstandeten zweiten Verbindungsstelle elektrisch miteinander verbunden. Eine Wechselstromquelle prägt einen Wechselstrom an der ersten Verbindungsstelle ein und entzieht den Wechselstrom an der anderen Verbindungsstelle.

Der Primärleiter ist zwischen den beiden Verbindungsstellen aus Primärleiterabschnitten und zwischen den Primärleiterabschnitten angeordneten Vertauschungsstellen zusammengesetzt.

In jedem Primärleiterabschnitt ist jede der Leitungen möglichst geradlinig verlegt, insbesondere auf einem konstanten Abstand oder konstanter Distanz zu einer Verfahrfläche des Mobilteils.

Wenn die Leitungen jeweils verschiedene Abstände zur Verfahrfläche aufweisen, wird die Vertauschung an dem Primärleiterabschnitt angrenzenden Vertauschungsstelle zwischen zwei Leitungen durchgeführt, insbesondere die nicht den kleinsten Abstand oder die kleinste Distanz zur Verfahrfläche aufweisen. Somit wird eine Stromangleichung zwischen den beiden Leitungen ausgeführt, die weiter entfernt sind als eine erste Leitung. Trotz der elektrischen Parallelschaltung der Leitungen ist der Strombetrag in der ersten Leitung etwas größer, da diese nicht an der Vertauschung beteiligt ist und nicht im Inneren der Leitungsanordnung, sondern am Rand angeordnet ist. Auf diese Weise wird dem Mobilteil mit seiner Wicklung von der ersten Leitung etwas mehr elektrische Leistung übertragen als von den an der Vertauschung teilnehmenden Leitungen.

Die Leitungen sind jeweils durch den ersten Primärleiterabschnitt, die Vertauschungsstelle und den zweiten, also den auf die Vertauschungsstelle nachfolgenden Primärleiterabschnitt verlegt. Jede der Leitungen führt also von der ersten Verbindungsstelle zur zweiten Verbindungsstelle. Innerhalb des ersten Primärleiterabschnitts sind die Leitungen voneinander beabstandet.

Der Primärleiter darf weitere solcher Vertauschungsstellen und Primärleiterabschnitte aufweisen. Jedoch unterscheiden sich zwei in Verlegerichtung aufeinander folgende Primärleiterabschnitte zumindest in der Anordnung der zweiten und dritten Leitung.

Wenn die Leitungen alle denselben Abstand zur Verfahrfläche aufweisen, ist die Wirkung der magnetischen Kopplung zwischen zwei zueinander parallel verlaufenden Primärleiterabschnitten wichtig, von denen der erste als Hinleiter und der zweite als Rückleiter fungiert. Die äußerste Leitung, also diejenige Leitung, welche im Hinleiter angeordnet ist und den größten Abstand zum Rückleiter hat, ist der geringsten magnetischen Kopplung mit dem Rückleiter ausgesetzt. Daher werden dann andere Leitungen vertauscht. Somit wird der Strombetrag in diesen Leitungen vergleichmäßigt.

Bei diesem System wird also ein ungleichmäßiges Tauschen der Leiter ausgeführt.

**Insbesondere** gleicht der Abstand der zweiten Leitung im zweiten Primärleiterabschnitt dem Abstand der dritten Leitung im ersten Primärleiterabschnitt und der Abstand der dritten Leitung im zweiten Primärleiterabschnitt gleicht dem Abstand der zweiten Leitung im ersten Primärleiterabschnitt. Von Vorteil ist dabei, dass die Positionen der beiden vertauschten Leitungen ausgetauscht sind. Somit ist die Wirkung der magnetischen Kopplungen der Leitungen vergleichmäßigt und der Strombetrag in den beiden vertauschten Leitungen im Wesentlichen gleich groß.

Wichtige Merkmale bei dem **erfindungsgemäßen** System zur berührungslosen Übertragung elektrischer Leistung von einem Primärleiter an eine Wicklung nach Anspruch 1, die an einem entlang einer Verfahrfläche bewegbaren Mobilteil angeordnet ist, insbesondere an der dem Primärleiter zugewandten Seite, insbesondere Unterseite, des Mobilteils, **sind, dass** der Primärleiter Primärleiterabschnitte aufweist, die miteinander oder über jeweils eine Vertauschungsstelle elektrisch verbunden sind,
wobei der Primärleiter drei, insbesondere zueinander und zur Verfahrfläche parallel verlegte Leitungen, aufweist,
wobei zu einem ersten der Primärleiterabschnitte ein zweiter der Primärleiterabschnitte parallel angeordnet ist, insbesondere wobei der erste Primärleiterabschnitt als Hinleiter und der zweite als Rückleiter fungiert,
wobei jede der Leitungen des ersten Primärleiterabschnitts einen jeweiligen Abstand zum zweiten Primärleiterabschnitt aufweist,
wobei jede der Leitungen des zweiten Primärleiterabschnitts eine jeweilige Distanz zum ersten Primärleiterabschnitt aufweist,
wobei im ersten Primärleiterabschnitt die besagten Abstände der Leitungen sich voneinander unterscheiden,
wobei im zweiten Primärleiterabschnitt die besagten Distanzen der Leitungen sich voneinander unterscheiden,
wobei im ersten Primärleiterabschnitt eine erste der Leitungen den größten Abstand zum zweiten Primärleiterabschnitt aufweist und diese erste Leitung im zweiten Primärleiterabschnitt die größte Distanz zum ersten Primärleiterabschnitt aufweist,

insbeosndere wobei der **Betrag dieses Abstandes und der Betrag dieser Distanz gleich** groß sind,
wobei der erste Primärleiterabschnitt über eine Vertauschungsstelle mit dem zweiten Primärleiterabschnitt elektrisch verbunden ist, so dass im ersten Primärleiterabschnitt eine zweite Leitung einen kleineren Abstand als eine dritte Leitung aufweist und im zweiten Primärleiterabschnitt die zweite Leitung eine größere Distanz aufweist als die dritte Leitung.

Von Vorteil ist dabei, dass die Leitungen des Hinleiters und des Rückleiters sogar alle in eine zur Verfahrfläche parallelen, aber von ihr beabstandeten Ebene angeordnet sind und trotzdem der Strom vergleichmäßigbar ist. Die erste Leitung ist dabei eine äußere Leitung. Die zweite und dritte Leitung sind dabei weiter innen liegende Leitungen.

im Unterschied zum nächstliegenden Stand der Technik wird auch bei der Erfindung nach dem Anspruch 1 ein anders geartetes ungleichmäßiges Tauschen der Leiter ausgeführt. Dabei bleibt die äußere **Leitung die** äußere Leitung - sowohl vor als auch nach der Vertauschungsstelle.

Bei einer vorteilhaften Ausgestaltung gleicht die Distanz der zweiten Leitung im zweiten Primärleiterabschnitt dem Abstand der dritten Leitung im ersten Primärleiterabschnitt, wobei die Distanz der dritten Leitung im zweiten Primärleiterabschnitt dem Abstand der zweiten Leitung im ersten Primärleiterabschnitt gleicht. Von Vorteil ist dabei, dass die Positionen der zweiten und dritten Leitung vom ersten zum zweiten Primärleiterabschnitt, also vom Hinleiter zum Rückleiter vertauscht sind. Somit ist die Wirkung der magnetischen Kopplungen auf die beiden Leitungen vergleichmäßigt.

Bei einer vorteilhaften Ausgestaltung sind die drei Leitungen an einer ersten Verbindungsstelle miteinander elektrisch verbunden,
insbesondere wobei die drei Leitungen an einer zweiten Verbindungsstelle miteinander elektrisch verbunden sind, die von der ersten Verbindungsstelle beabstandet ist. Von Vorteil ist dabei, dass die erste Verbindungsstelle der Einspeisepunkt für den eingeprägten Strom des Wechselstromquells ist und die andere Verbindungsstelle der Ausleitpunkt.

Bei einer vorteilhaften Ausgestaltung prägt eine Wechselstromquelle einen Wechselstrom in die erste Verbindungsstelle ein, welcher zur Wechselstromquelle an der zweiten Verbindungsstell zurückgeleitet wird. Von Vorteil ist dabei, dass der Wechselstrom in den Primärleiter einprägbar ist. Somit ist im Unterschied zu einer Spannungsquelle ein möglichst konstanter Strombetrag vorhanden.

Bei einer vorteilhaften Ausgestaltung ist jede der Leitungen aus HF-Litze besteht und/oder aus einer Litze gefertigt, die jeweils aus von einer Isolierung umgebenen Einzeldrähten besteht. Von Vorteil ist dabei, dass Verluste verringerbar sind. Denn jede der Leitungen besteht somit aus einem Bündel von Einzeldrähten, die jeweils isoliert sind. Auf diese Weise sind durch Stromverdrängungen, insbesondere aufgrund magnetischer Wirkungen, insbesondere wie Skin-Effekt, bewirkte Verluste verringerbar.

Bei einer vorteilhaften Ausgestaltung ist die Verfahrfläche eine Ebene. Von Vorteil ist dabei, dass das Mobilteil beispielsweise als fahrerloses Transportsystem, automatisch geführtes Fahrzeug oder mobiler Logistikassistent ausführbar ist.

Bei einer vorteilhaften Ausgestaltung ist die Verfahrfläche eine eindimensionale Kurve, wobei das Mobilteil im Fall der eindimensionalen Kurve schienengeführt ist. Von Vorteil ist dabei, dass das Mobilteil als Schienenfahrzeug ausführbar ist.

Bei einer vorteilhaften Ausgestaltung sind auf die erste Leitung Daten aufmoduliert, indem ein Stromanteil aufmoduliert ist, dessen Frequenz mindestens zehnmal höher ist als die Frequenz des von der Wechselstromquelle eingeprägten Wechselstroms. Von Vorteil ist dabei, dass zusätzlich auf die nicht vertauschte Leitung und somit weniger verdrillt ausgeführte Leitung Daten aufmodulierbar sind. Da in dieser ersten Leitung auch schon der größere Stromanteil des von der Wechselstromquelle eingeprägten Stromes fließt, ist ein größerer Anteil auch der für die Datenübertragung verwendeten aufmodulierten Stromanteile auf der ersten Leitung vorhanden und somit ein verbessertes Signal-Rauschverhältnis bei der Datenübertragung erreichbar. Dieser Effekt wird auch durch den Effekt der Verringerung der magnetischen Kopplungen unterstützt.

Bei einer vorteilhaften Ausgestaltung weist das Mobilteil einen U-förmigen Ferritkern auf, wobei Leitungen eines ersten Primärleiterabschnitts zwischen den Schenkeln des U-förmigen Ferritkerns angeordnet sind und wobei Leitungen eines zweiten Primärleiterabschnitts außerhalb des Ferritkerns angeordnet sind,

insbesondere wobei eine als Sekundärwicklung fungierende Wicklung um einen die beiden Schenkel des U verbindenden Jochbereich herumgewickelt ist. Von Vorteil ist dabei, dass ein hoher Wirkungsgrad auch bei einer großen Beabstandung von Hinleiter und Rückleiter erreichbar ist.

Bei einer vorteilhaften Ausgestaltung weist das Mobilteil einen E-förmigen Ferritkern auf,
wobei Leitungen eines ersten Primärleiterabschnitts zwischen einem ersten Schenkel und dem Mittelschenkel des E-förmigen Ferritkerns angeordnet sind
und wobei Leitungen eines zweiten Primärleiterabschnitts zwischen einem zweiten Schenkel und dem Mittelschenkel des E-förmigen Ferritkerns angeordnet sind,

insbesondere wobei eine als Sekundärwicklung fungierende Wicklung um ein die Schenkel des E verbindenden Jochbereich herumgewickelt ist. Von Vorteil ist dabei, dass möglichst viel des Flusses in dem Ferritkern führbar ist.

Bei einer vorteilhaften Ausgestaltung weist das Mobilteil einen E-förmigen Ferritkern auf,
wobei eine als Sekundärwicklung fungierende Wicklung als Flachwicklung ausgeführt ist, die um den Mittelschenkel des E herumgewickelt ist, insbesondere als Leiterbahn auf einer Leiterplatte herumgeführt ist. Von Vorteil ist dabei, dass der Primärleiter im Boden anordenbar ist, also unterhalb der Verfahrfläche. Dabei ist wichtig, dass der Spulenkern, insbesondere Ferritkern, den Boden nicht durchdringt, sondern beabstandet ist von der Verfahrfläche.

Weitere Vorteile ergeben sich aus den Unteransprüchen.

Die Erfindung wird nun anhand von schematischen Abbildungen 1, 5 und 8 näher erläutert: Die weiteren Abbildungen zeigen nicht erfindugsgemäße Ausführungsformen.

In der Figur 1 ist ein erstes System zur berührungslosen Energieübertragung schematisch skizziert, wobei ein flacher Übertragerkopf verwendet ist und Leitungen (A, B, C) parallel zum flachen Übertragerkopf, insbesondere horizontal, angeordnet sind.

In der Figur 2 ist ein zweites solches System schematisch skizziert, wobei die Leitungen (A, B, C) senkrecht zum flachen Übertragerkopf, insbesondere vertikal, angeordnet sind.

In der Figur 3 ist ein drittes solches System schematisch skizziert, wobei im Unterschied zur Figur 2 statt des flachen Übertragerkopfes ein U-förmiger Übertragerkopf verwendet wird.

In der Figur 4 ist ein viertes solches System schematisch skizziert, wobei im Unterschied zur Figur 2 statt des flachen Übertragerkopfes ein U-förmiger Übertragerkopf verwendet wird.

In der Figur 5 ist eine Vertauschungsstelle der Leitungen (A, B, C) des Systems aus Figur 1 gezeigt, wobei vor der Vertauschungsstelle ein als Hinleiter 1 fungierender Primärleiterabschnitt und nach der Vertauschungsstelle ein als Rückleiter 2 fungierender Primärleiterabschnitt gezeigt ist.

In der Figur 6 ist eine Vertauschungsstelle der Leitungen (A, B, C) des Systems aus Figuren 2, 3 oder 4 gezeigt, wobei vor der Vertauschungsstelle ein als Hinleiter 1 fungierender Primärleiterabschnitt und nach der Vertauschungsstelle ein als Rückleiter 2 fungierender Primärleiterabschnitt gezeigt ist.

In der Figur 7 sind Vertauschungsstellen (70, 71, 72) eines Systems aus Figur 2, 3 oder 4 gezeigt.

In der Figur 8 ist ein System gezeigt, wobei entlang einer Hauptfahrstrecke Abzweigungen 73 , angeordnet sind.

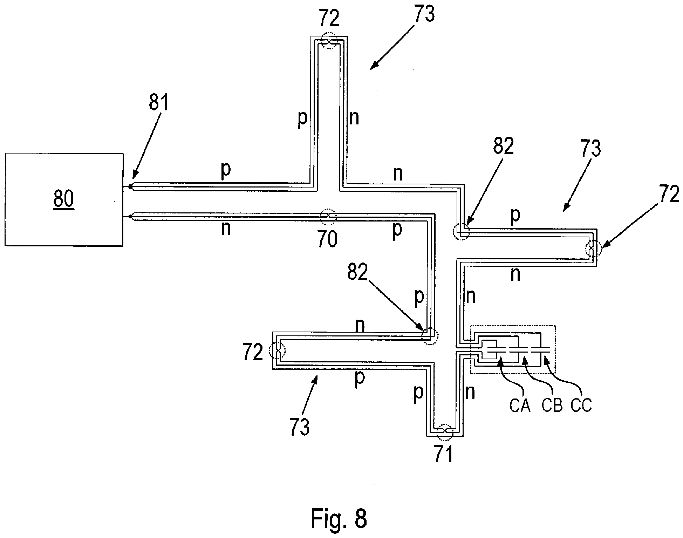

Wie in den Figur 8 gezeigt, weist das System eine Stromleiterschleife auf, die aus einer Wechselstromquelle 80 gespeist wird.

Die Stromleiterschleife ist entlang einer Fahrstrecke verlegt, die eine Hauptfahrstrecke und stichwegartige Abzweigungen 73 aufweist.

Die Stromleiterschleife weist Fahrstreckenabschnitte auf, entlang derer jeweils ein Hinleiterabschnitt und ein dazu parallel angeordneter Rückleiterabschnitt vorgesehen ist.

Die Stromrichtung im Hinleiter des Fahrstreckenabschnitts ist entgegengesetzt zur Stromrichtung im Rückleiter des Fahrstreckenabschnitts.

Erfindungsgemäß sind entlang der Stromleiterschleife Vertauschungsstellen (70, 71, 72) angeordnet.

Die Stromleiterschleife ist eine Primärleiterschleife, wobei der Primärleiter aus drei Leitungen (A, B, C) ausgeführt ist, welche an einer ersten Verbindungsstelle 81 miteinander elektrisch verbunden sind und diese Verbindungsstelle mit einem ersten Anschluss einer Wechselstromquelle 80 verbunden sind. Ein zweiter Anschluss der Wechselstromquelle 80 ist mit einer zweiten Verbindungsstelle 81 der drei Leitungen (A, B, C) verbunden.

Die Wechselstromquelle 80 prägt einen Wechselstrom in die Primärleiterschleife ein, der von der ersten Verbindungsstelle 81 zur zweiten Verbindungsstelle 81 fließt.

Ein entlang der Stromleiterschleife bewegbares Mobilteil weist einen Übertragerkopf auf, der einen Spulenkern, insbesondere Ferritkern, aufweist und eine um den Spulenkern 3 gewickelte Wicklung 4.

Somit ist über die induktive Kopplung zwischen der Stromleiterschleife und der Wicklung 4 berührungslos elektrische Leistung übertragbar.

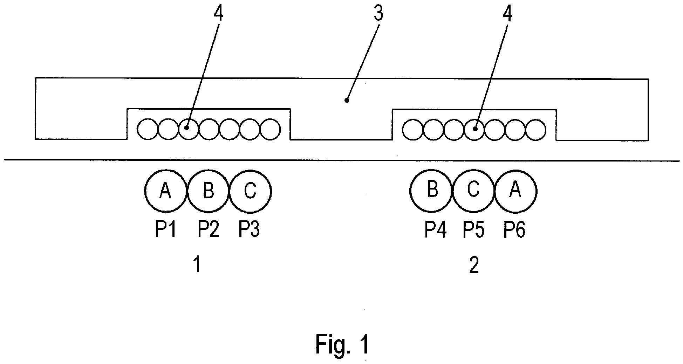

Bei der Ausführung nach Figur 1 wird ein flacher Übertragerkopf verwendet, bei welchem die Wicklung 4 als Flachwicklung um einen Mittelschenkel eines E-förmigen Kerns 3 ausgeführt ist.

Infolge des flachen Übertragerkopfes ist es gemäß Figur 1 ermöglicht, dass der Primärleiter, insbesondere also die Wicklung 4, an oder sogar in einem Boden der das System umfassenden Anlage angeordnet ist. Der Übertragerkopf ist an der Unterseite, also der dem Boden der Anlage zugewandten Seite, des Mobilteils anordenbar. Somit ist das Mobilteil auf dem Boden verfahrbar.

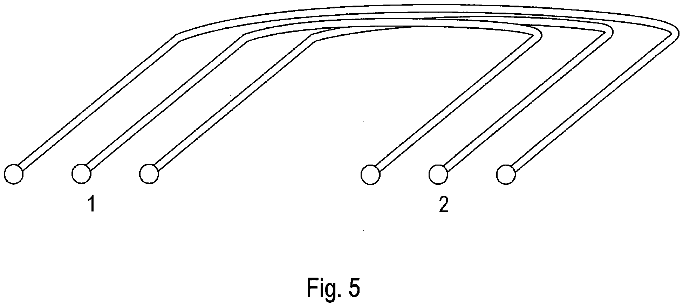

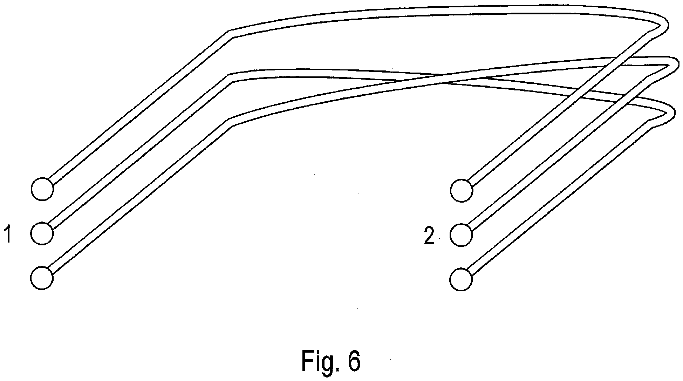

Wie in Figur 5 oder Figur 6 gezeigt, werden an den dort jeweils gezeigten Vertauschungsstellen zwei der drei Leitungen vertauscht.

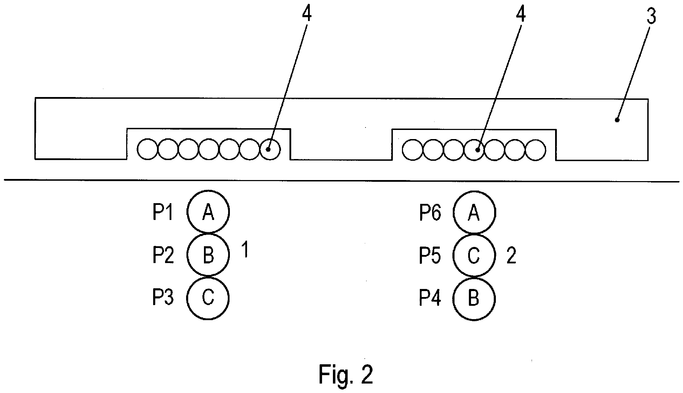

Figur 6 zeigt dabei eine zum System nach Figur 2, 3, oder 4 gehörige Vertauschung.

Figur 5 zeigt dabei eine zum System nach Figur 1 gehörige Vertauschung.

In der Figur 5 werden die Leitungen B und C vertauscht, da diese einander näher sind als die äußere Leitung A. Denn aufgrund der magnetischen Kopplungen würde in der inneren Leitung C des Hinleiters 1 ein größerer Strom fließen, wenn keine Vertauschung ausgeführt würde und somit der Rückleiter die Leitung C als innere Leitung P4 aufweisen würde. Mittels der Vertauschung ist erreichbar, dass in den Leitungen B und C derselbe Strombetrag fließt.

Somit ist durch die mehrfache, insbesondere dreifache, Ausführung des Primärleiters ein größerer Strom einprägbar.

Jede der Leitungen (A, B, C) ist jeweils als HF-Litze ausgeführt, also als Bündel von gegeneinander isolierten einzelnen Drähten.

Der Primärleiter wird von der Wechselstromquelle 80 mit einem Wechselstrom beaufschlagt, der eine Frequenz zwischen 10 kHz und 1 MHz aufweist.

Wie in Figur 2 gezeigt, werden dort die zwei weiteren, von der Wicklung 4 entfernten Leitungen B und C. Somit fließt zwar in der Leitung A ein größerer Strombetrag als in den beiden anderen, den infolge der Vertauschung gleichen Strombetrag aufweisenden Leitungen B und C. Aber diese Leitung A ist näher an der Wicklung 4 angeordnet, so dass ein etwas höherer Strombetrag in Leitung A keine Verschlechterung der induktiven Übertragung elektrischer Leistung bewirkt.

Auf jeden Fall ist die Stromverteilung durch die Vertauschung insgesamt vergleichmäßigt, also angeglichener als ohne die Vertauschung.

Infolge des flachen Übertragerkopfes ist es gemäß Figur 2 ermöglicht, dass der Primärleiter an oder sogar in einem Boden der das System umfassenden Anlage angeordnet ist. der Übertragerkopf ist an der Unterseite, also der dem Boden der Anlage zugewandten Seite, des Mobilteils anordenbar. Somit ist das Mobilteil auf dem Boden verfahrbar.

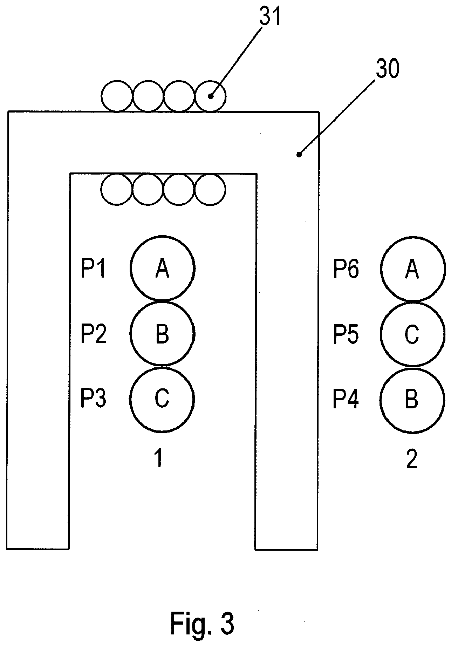

Figur 3 zeigt einen U-förmigen Übertragerkopf, bei welchem der Spulenkern 30, insbesondere Ferritkern, mit einem seiner Schenkel sogar durch den Bereich zwischen Hinleiter und Rückleiter hindurchragt. Auf diese Weise ist die induktive Kopplung sehr stark.

Diese Ausführung ist besonders geeignet für eine Schienenbahn einer Anlage, wobei der Hinleiter entlang der Schienen verlegt ist.

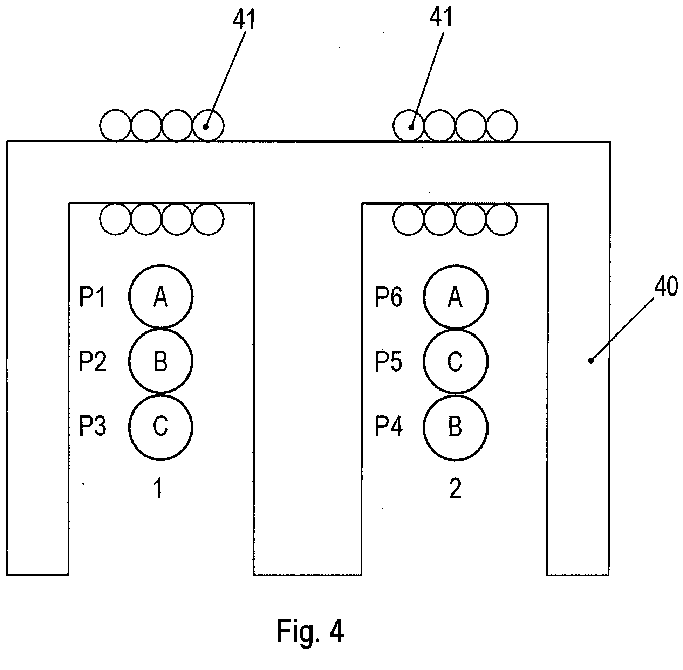

Figur 4 zeigt einen E-förmigen Kern 40, dessen Mittelschenkel ebenfalls durch den Bereich zwischen Hinleiter und Rückleiter hindurchragt. Auf diese Weise ist die induktive Kopplung ebenfalls sehr stark.

Diese Ausführung ist besonders geeignet für eine Schienenbahn einer Anlage, wobei der Hinleiter entlang der Schienen verlegt ist und Rückleiter parallel dazu ebenfalls.

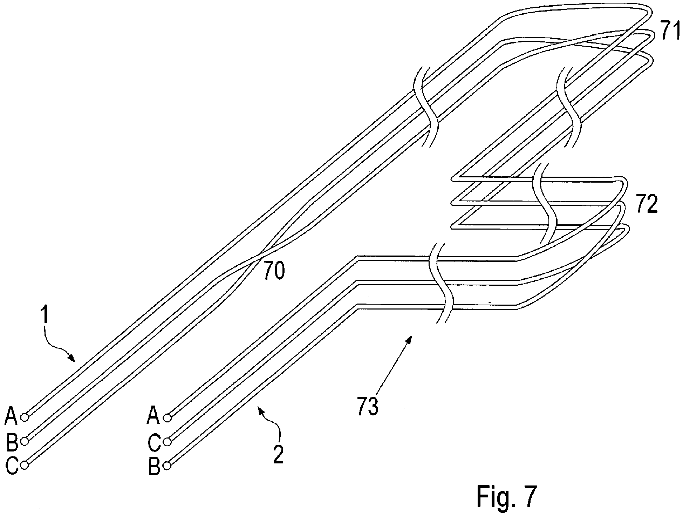

In Figur 7 ist ein beispielhafter Teilbereich des Primärleitersystems dargestellt. Dabei ist eine Abzweigung 73 quer zu einer linearen Hauptfahrstrecke vorhanden.

Eine erste Vertauschungsstelle 70 ist für die Abzweigung 73 vorgesehen. Dabei ist die Vertauschungsstelle 73 am Hinleiter 1 gegenüberliegend zur Abzweigung 73 an der Hauptfahrstrecke angeordnet.

Eine weitere Vertauschungsstelle 71 ist am Endbereich der Hauptfahrstrecke angeordnet.

Ebenso ist eine dritte Vertauschungsstelle 73 am Endbereich der Abzweigung 73 angeordnet.

Wie in Figur 8 gezeigt, ist am finalen Endbereich jeder Abzweigung oder Hauptfahrstrecke jeweils eine Vertauschungsstelle (71, 72) angeordnet. Jeder Abzweigung ist außerdem noch eine weitere Vertauschungsstelle (82, 70) zugeordnet, die entweder der Abzweigung 73 gegenüberliegend angeordnet ist oder einem der beiden Übergangsbereiche von der Hauptfahrstrecke zur jeweiligen Abzweigung 73. Diejenigen Bereiche des Primärleiters mit der Anordnungsreihenfolge A, B, C sind in Figur 8 mit p bezeichnet. Die nach einer Vertauschungsstelle daraus hervorgehenden Bereiche des Primärleiters mit der Anordnungsreihenfolge A, C, B sind in Figur 8 mit n bezeichnet.

Die Hauptfahrstrecke ist in Figur 8 L-förmig, die Abzweigungen 73 sind gerade dargestellt.

Vorzugsweise besteht das Primärleitersystem also aus drei elektrisch parallel geschalteten Leiterschleifen, deren Leiter auch geometrisch im Wesentlichen parallel verlaufen.

Insbesondere sind die Vertauschungsstellen jeweils am Ende jedes Abzweigs und an einem jeweiligen Fußpunkt jedes Abzweigs angeordnet sowie am Ende der Strecke.

Kompensationskondensatoren (CA, CB, CC), insbesondere zur Kompensation von Streckeninduktivitäten des Primärleitersystems sind aufgeteilt und einzeln in die drei elektrisch parallel geschalteten, insbesondere also separaten, Leiterschleifen des Primärleitersystems eingefügt. Hierzu eignet sich der Bereich eines Fußpunktes besonders.

Bei weiteren erfindungsgemäßen Ausführungsbeispielen sind aber Hauptfahrstrecke und/oder Abzweigungen 73 gekrümmt ausgeführt.

Bei weiteren erfindungsgemäßen Ausführungsbeispielen wird der aus mehreren Leitungen ausgeführte Primärleiter nicht nur mit einem Wechselstrom aus der Stromquelle zur Leistungsversorgung beaufschlagt, sondern auch mit einem höher frequenten Stromanteil auf Leitung A zur Datenübertragung, insbesondere also auf der zur Wicklung (4, 31, 41) oder zum Übertragerkopf nächstgelegenen Leitung, insbesondere, wenn der Primärleiter nach Figur 2, 3 oder 4 ausgeführt ist. Die für die Aufmodulation verwendete Frequenz ist mindestens zehnmal höher als die Frequenz der des aus der Stromquelle 80 eingeprägten Wechselstroms.

Die Einkoppelung der höher frequenten Stromanteile ist entweder kapazitiv insbesondere in der Nähe der Verbindungsstelle auf die Leitung A oder induktiv ausführbar. Die entsprechende Auskoppelung ist an der Wicklung (4, 31, 41) vorgesehen.

### Bezugszeichenliste

1 Hinleiter
2 Rückleiter
3 Spulenkern, insbesondere Ferritkern
4 Wicklung
30 Ferritkern
31 Wicklung
40 Ferritkern
41 Wicklung
70 Vertauschungsstelle für eine Abzweigung
71 Vertauschungsstelle für einen finalen Endbereich, also Endbereich der Hauptfahrstrecke
72 Vertauschungsstelle für einen Endbereich einer Abzweigung 73
73 Abzweigung
80 Wechselstromquelle
81 Verbindungsstelle
82 Vertauschungsstelle am Übergang zur Abzweigung 73
CA Kompensationskondensator
CB Kompensationskondensator
CC Kompensationskondensator

## Patentansprüche

1. System zur berührungslosen Übertragung elektrischer Leistung von einem Primärleiter an eine Wicklung (4 ), die an einem entlang einer Verfahrfläche bewegbaren Mobilteil angeordnet ist, insbesondere an der dem Primärleiter zugewandten Seite, insbesondere Unterseite, des Mobilteils,
**wobei** der Primärleiter Primärleiterabschnitte aufweist, die miteinander oder über jeweils eine Vertauschungsstelle (70, 71, 72) elektrisch verbunden sind,
wobei der Primärleiter **drei** Leitungen, insbesondere zueinander und zur Verfahrfläche parallel verlegte Leitungen, aufweist,
wobei zu einem ersten der Primärleiterabschnitte ein zweiter der Primärleiterabschnitte parallel angeordnet ist, insbesondere wobei der erste Primärleiterabschnitt als Hinleiter (1) und der zweite als Rückleiter (2) fungiert,
wobei jede der Leitungen des ersten Primärleiterabschnitts einen jeweiligen Abstand zum zweiten Primärleiterabschnitt aufweist, wobei jede der Leitungen des zweiten Primärleiterabschnitts eine jeweilige Distanz zum ersten Primärleiterabschnitt aufweist,
wobei im ersten Primärleiterabschnitt die **besagten** Abstände der Leitungen sich voneinander unterscheiden,
wobei im zweiten Primärleiterabschnitt die **besagten** Distanzen der Leitungen sich voneinander unterscheiden,
wobei im ersten Primärleiterabschnitt eine erste der Leitungen den größten Abstand zum zweiten Primärleiterabschnitt aufweist und diese erste Leitung im zweiten Primärleiterabschnitt die größte Distanz zum ersten Primärleiterabschnitt aufweist, **insbesondere wobei der Betrag dieses Abstandes und der Betrag dieser Distanz gleich groß sind,**
**dadurch gekennzeichnet, dass**
der erste Primärleiterabschnitt über eine Vertauschungsstelle (70, 71, 72) mit dem zweiten Primärleiterabschnitt elektrisch verbunden ist, so dass im ersten Primärleiterabschnitt eine zweite Leitung einen kleineren **besagten** Abstand als eine dritte Leitung aufweist und im zweiten Primärleiterabschnitt die zweite Leitung **eine größere besagte Distanz** aufweist als die dritte Leitung.

2. System nach Anspruch 1, **dadurch gekennzeichnet, dass**
die Distanz der zweiten Leitung im zweiten Primärleiterabschnitt dem Abstand der dritten Leitung im ersten Primärleiterabschnitt gleicht und dass
die Distanz der dritten Leitung im zweiten Primärleiterabschnitt dem Abstand der zweiten Leitung im ersten Primärleiterabschnitt gleicht.

3. System nach einem der vorangegangenen Ansprüche,
**dadurch gekennzeichnet, dass**
die drei Leitungen an einer ersten Verbindungsstelle miteinander elektrisch verbunden sind, insbesondere wobei die drei Leitungen an einer zweiten Verbindungsstelle miteinander elektrisch verbunden sind, die von der ersten Verbindungsstelle beabstandet ist.

4. System nach Anspruch 3,
**dadurch gekennzeichnet, dass**
eine Wechselstromquelle (80) einen Wechselstrom in die erste Verbindungsstelle einprägt, welcher **von der zweiten Verbindungsstelle** zur Wechselstromquelle (80) zurückgeleitet wird.

5. System nach einem der vorangegangenen Ansprüche,
**dadurch gekennzeichnet, dass**
jede der Leitungen aus HF-Litze besteht und/oder aus einer Litze gefertigt ist, die jeweils aus von einer Isolierung umgebenen Einzeldrähten besteht.

6. System nach Anspruch 4,
**dadurch gekennzeichnet, dass**
auf die erste Leitung Daten aufmoduliert sind, indem ein Stromanteil aufmoduliert ist, dessen Frequenz mindestens zehnmal höher ist als **eine** Frequenz des von der Wechselstromquelle (80) eingeprägten Wechselstroms.

7. System nach einem der vorangegangenen Ansprüche,
**dadurch gekennzeichnet, dass**
das Mobilteil einen U-förmigen Ferritkern aufweist, wobei **die** Leitungen eines ersten Primärleiterabschnitts zwischen den Schenkeln des U-förmigen Ferritkerns angeordnet sind und wobei **die** Leitungen eines zweiten Primärleiterabschnitts außerhalb des Ferritkerns angeordnet sind,
insbesondere wobei die als Sekundärwicklung fungierende Wicklung um einen die beiden Schenkel des U verbindenden Jochbereich herumgewickelt ist.

8. System nach einem der Ansprüche 1 bis 6,
**dadurch gekennzeichnet, dass**
das Mobilteil einen E-förmigen Ferritkern (3) aufweist,
wobei **die** Leitungen eines ersten Primärleiterabschnitts zwischen einem ersten Schenkel und dem Mittelschenkel des E-förmigen Ferritkerns angeordnet sind
und wobei **die** Leitungen eines zweiten Primärleiterabschnitts zwischen einem zweiten Schenkel und dem Mittelschenkel des E-förmigen Ferritkerns angeordnet sind,
insbesondere wobei **die** als Sekundärwicklung fungierende Wicklung (4) um einen die Schenkel des E verbindenden Jochbereich herumgewickelt ist.

9. System nach einem der Ansprüche 1 bis 6, **dadurch gekennzeichnet, dass**
das Mobilteil einen E-förmigen Ferritkern (3) aufweist,
wobei **die** als Sekundärwicklung fungierende Wicklung (4) als Flachwicklung ausgeführt ist, die um den Mittelschenkel des E herumgewickelt ist, insbesondere als Leiterbahn auf einer Leiterplatte herumgeführt ist.

10. System nach einem der vorangegangenen Ansprüche,
**dadurch gekennzeichnet, dass**
die Leitungen als drei elektrisch parallel geschaltete Leiterschleifen das Primärleitersystem ausbilden, wobei die **Leitungen zueinander** auch geometrisch im Wesentlichen parallel verlegt sind.

11. System nach einem der vorangegangenen Ansprüche,
**dadurch gekennzeichnet, dass**
entlang der als Bahnstrecke ausgeführten Verfahrfläche die Vertauschungsstellen (70, 71, 72)
- am Ende jedes Abzweigs
- an einem jeweiligen Fußpunkt und/oder
- am Ende der Strecke
angeordnet sind.

12. System nach einem der vorangegangenen Ansprüche,
**dadurch gekennzeichnet, dass** jeder Leitung ein jeweiliger Kompensationskondensator elektrisch in Reihe zugeschaltet ist.

## Claims

1. System for contactlessly transmitting electrical power from a primary conductor to a winding (4) that is arranged on a mobile component which is movable along a travel surface, in particular arranged on the side of the mobile component facing the primary conductor, in particular the underside thereof,
the primary conductor having primary-conductor portions, which are electrically connected to one another or via a respective permutation point (70, 71, 72),
the primary conductor having three lines, in particular lines laid in parallel with one another and with the travel surface,
a second of the primary-conductor portions being arranged in parallel with a first of the primary-conductor portions, in particular the first primary-conductor portion acting as a forward conductor (1) and the second acting as a return conductor (2),
each of the lines of the first primary-conductor portion being at a respective spacing from the second primary-conductor portion,
each of the lines of the second primary-conductor portion being at a respective distance from the first primary-conductor portion,
the aforementioned spacings of the lines being different from one another in the first primary-conductor portion,
the aforementioned distances of the lines being different from one another in the second primary-conductor portion,
a first of the lines being at the greatest spacing from the second primary-conductor portion in the first primary-conductor portion, and this first line being at the greatest distance from the first primary-conductor portion in the second primary-conductor portion,
the magnitude of said spacing and the magnitude of said distance in particular being the same,
**characterised in that**
the first primary-conductor portion is electrically connected to the second primary-conductor portion via a permutation point (70, 71, 72) such that a second line has a smaller aforementioned spacing than a third line in the first primary-conductor portion and the second line has a greater aforementioned distance than the third line in the second primary-conductor portion.

2. System according to claim 1,
**characterised in that**
the distance of the second line in the second primary-conductor portion is the same as the spacing of the third line in the first primary-conductor portion, and **in that** the distance of the third line in the second primary-conductor portion is the same as the spacing of the second line in the first primary-conductor portion.

3. System according to any of the preceding claims,
**characterised in that**
the three lines are electrically interconnected at a first connection point,
the three lines in particular being electrically interconnected at a second connection point that is spaced apart from the first connection point.

4. System according to claim 3,
**characterised in that**
an alternating current is applied to the first connection point by an AC power source (80) and is returned to the AC power source (80) from the second connection point.

5. System according to any of the preceding claims,
**characterised in that**
each of the lines consists of a high-frequency stranded core and/or is produced from a stranded core, each consisting of individual wires enclosed by insulation.

6. System according to claim 4,
**characterised in that**
data are modulated onto the first line by modulating a current fraction of which the frequency is at least ten times greater than a frequency of the alternating current applied by the AC power source (80).

7. System according to any of the preceding claims,
**characterised in that**
the mobile component has a U-shaped ferrite core, the lines of a first primary-conductor portion being arranged between the legs of the U-shaped ferrite core, and the lines of a second primary-conductor portion being arranged outside the ferrite core,
the winding that acts as a secondary winding in particular being wound around a yoke region that connects the two legs of the U.

8. System according to any of claims 1 to 6,
**characterised in that**
the mobile component has an E-shaped ferrite core (3),
the lines of a first primary-conductor portion being arranged between a first leg and the middle leg of the E-shaped ferrite core,
and the lines of a second primary-conductor portion being arranged between a second leg and the middle leg of the E-shaped ferrite core,
the winding (4) that acts as a secondary winding in particular being wound around a yoke region that connects the legs of the E.

9. System according to any of claims 1 to 6,
**characterised in that**
the mobile component has an E-shaped ferrite core (3),
the winding (4) that acts as a secondary winding being configured as a flat winding that is wound around the middle leg of the E, in particular is guided around as a conducting track on a printed circuit board.

10. System according to any of the preceding claims,
**characterised in that**
the lines form the primary-conductor system as three conductor loops wired electrically in parallel, the lines also being laid geometrically substantially in parallel with one another.

11. System according to any of the preceding claims,
**characterised in that**
along the travel surface configured as a section of a route, the permutation points (70, 71, 72) are arranged
- at the end of each branch,
- at each base point and/or
- at the end of the route.

12. System according to any of the preceding claims,
**characterised in that**
a respective compensation capacitor is wired electrically in series with each line.

## Revendications

1. Système de transmission sans contact de puissance électrique, à partir d'un conducteur primaire, à un enroulement (4) disposé sur une partie mobile pouvant être mue le long d'une surface de déplacement, notamment sur la face de ladite partie mobile pointant vers ledit conducteur primaire, la face inférieure en particulier,
le conducteur primaire comportant des tronçons raccordés électriquement les uns aux autres, ou par l'intermédiaire d'une zone respective d'échange (70, 71, 72),
ledit conducteur primaire comprenant trois lignes, en particulier des lignes implantées parallèlement les unes aux autres et à ladite surface de déplacement,
sachant qu'un deuxième tronçon, parmi les tronçons de conducteur primaire, est disposé parallèlement à un premier desdits tronçons de conducteur primaire, lesdits premier et deuxième tronçons de conducteur primaire remplissant respectivement les fonctions d'un conducteur d'arrivée (1), et d'un conducteur de retour (2),
chacune des lignes du premier tronçon de conducteur primaire présentant un espacement respectif par rapport au deuxième tronçon de conducteur primaire,
chacune des lignes dudit deuxième tronçon de conducteur primaire présentant une distance respective par rapport audit premier tronçon de conducteur primaire,
sachant que les espacements précités, entre les lignes, diffèrent les uns des autres dans le premier tronçon de conducteur primaire,
sachant que les distances précitées, entre les lignes, diffèrent les unes des autres dans le deuxième tronçon de conducteur primaire,
sachant que, dans le premier tronçon de conducteur primaire, une première ligne, parmi les lignes, présente l'espacement maximal par rapport au deuxième tronçon de conducteur primaire et que cette première ligne présente, dans ledit deuxième tronçon de conducteur primaire, la distance maximale par rapport audit premier tronçon de conducteur primaire, la valeur de cet espacement et la valeur de cette distance étant notamment égales, **caractérisé par le fait que**
le premier tronçon de conducteur primaire est raccordé électriquement au deuxième tronçon de conducteur primaire par l'intermédiaire d'une zone d'échange (70, 71, 72), de sorte que, dans ledit premier tronçon de conducteur primaire, une deuxième ligne présente un espacement précité inférieur à celui d'une troisième ligne et que la deuxième ligne présente, dans ledit deuxième tronçon de conducteur primaire, une distance précitée supérieure à celle de la troisième ligne.

2. Système selon la revendication 1,
**caractérisé par le fait que**
la distance de la deuxième ligne, dans le deuxième tronçon de conducteur primaire, est égale à l'espacement de la troisième ligne dans le premier tronçon de conducteur primaire ; et **par le fait que**
la distance de la troisième ligne, dans ledit deuxième tronçon de conducteur primaire, est égale à l'espacement de la deuxième ligne dans ledit premier tronçon de conducteur primaire.

3. Système selon l'une des revendications précédentes,
**caractérisé par le fait que**
les trois lignes sont connectées électriquement les unes aux autres au niveau d'une première zone de jonction,
sachant notamment que les trois lignes sont connectées électriquement, les unes aux autres, au niveau d'une seconde zone de jonction espacée de ladite première zone de jonction.

4. Système selon la revendication 3,
**caractérisé par le fait**
**qu'**une source (80) de courant alternatif injecte, dans la première zone de jonction, un courant alternatif qui est renvoyé vers ladite source (80) de courant alternatif par la seconde zone de jonction.

5. Système selon l'une des revendications précédentes,
**caractérisé par le fait que**
chacune des lignes est constituée d'un fil toronné HF et/ou est fabriquée en un fil toronné consistant, à chaque fois, en des fils métalliques individuels entourés d'un isolant.

6. Système selon la revendication 4,
**caractérisé par le fait que**
des données sont modulées, sur la première ligne, par modulation d'une part de courant dont la fréquence est au moins dix fois supérieure à une fréquence du courant alternatif injecté par la source (80) de courant alternatif.

7. Système selon l'une des revendications précédentes,
**caractérisé par le fait que**
la partie mobile est munie d'un noyau de ferrite configuré en U, les lignes d'un premier tronçon de conducteur primaire étant placées entre les branches dudit noyau de ferrite configuré en U, et les lignes d'un deuxième tronçon de conducteur primaire étant disposées à l'extérieur dudit noyau de ferrite,
sachant, en particulier, que l'enroulement remplissant la fonction d'un enroulement secondaire est bobiné tout autour d'une zone d'étrier reliant les deux branches du U.

8. Système selon l'une des revendications 1 à 6,
**caractérisé par le fait que**
la partie mobile est dotée d'un noyau de ferrite (3) configuré en E,
les lignes d'un premier tronçon de conducteur primaire étant interposées entre une première branche et la branche médiane dudit noyau de ferrite configuré en E,
et les lignes d'un deuxième tronçon de conducteur primaire étant interposées entre une deuxième branche et ladite branche médiane du noyau de ferrite configuré en E, sachant, en particulier, que l'enroulement (4) remplissant la fonction d'un enroulement secondaire est bobiné tout autour d'une zone d'étrier reliant les branches du E.

9. Système selon l'une des revendications 1 à 6,
**caractérisé par le fait que**
la partie mobile est pourvue d'un noyau de ferrite (3) configuré en E,
l'enroulement (4), remplissant la fonction d'un enroulement secondaire, étant réalisé sous la forme d'un enroulement aplati bobiné tout autour de la branche médiane du E et notamment guidé, en tant que piste conductrice, sur une plaquette à circuits imprimés.

10. Système selon l'une des revendications précédentes,
**caractérisé par le fait que**
les lignes matérialisent le système à conducteur primaire sous la forme de trois boucles conductrices branchées électriquement en parallèle, lesdites lignes étant également agencées, les unes par rapport aux autres, suivant une configuration géométrique substantiellement parallèle.

11. Système selon l'une des revendications précédentes,
**caractérisé par le fait que**
les zones d'échange (70, 71, 72) sont disposées, le long de la surface de déplacement conçue comme un parcours ferroviaire,
- à l'extrémité de chaque bifurcation,
- en un point respectif de base et/ou
- à l'extrémité dudit parcours.

12. Système selon l'une des revendications précédentes,
**caractérisé par le fait**
**qu'**un condensateur respectif de compensation est branché électriquement en série avec chaque ligne.
